# EUROPÄISCHE PATENTSCHRIFT

(11) **EP 3 511 707 B1**
(45) Veröffentlichungstag und Bekanntmachung des Hinweises auf die Patenterteilung: **03.03.2021**
(21) Anmeldenummer: 19150994.2
(22) Anmeldetag: 09.01.2019
(51) Int. Cl.: G01N 27/72, A23L 3/3436

(54) **VORRICHTUNG UND VERFAHREN ZUR BESTIMMUNG EINER AUFNAHMEKAPAZITÄT EINES SAUERSTOFFABSORBERS**
DEVICE AND METHOD FOR DETERMINING AN ABSORPTION CAPACITY OF AN OXYGEN ABSORBENT
DISPOSITIF ET PROCÉDÉ POUR DÉTERMINER UNE CAPACITÉ D'ABSORPTION D'UN ABSORBANT D'OXYGÈNE

(30) Priorität: 10.01.2018 DE 102018100462
(43) Veröffentlichungstag der Anmeldung: 17.07.2019
(73) Patentinhaber: B. Braun Avitum AG, 34212 Melsungen (DE)
(72) Erfinder: DÖRING, Stefan, 01326 Dresden (DE)
(74) Vertreter: Winter, Brandl, Fürniss, Hübner, Röss, Kaiser, Polte - Partnerschaft mbB

(56) Entgegenhaltungen:
- EP-A2- 0 218 259
- JP-A- 2003 149 207
- JP-A- 2010 271 176

## Beschreibung

### Technisches Gebiet

Die Erfindung betrifft eine Vorrichtung zur Bestimmung einer Aufnahmekapazität eines metallbasierten, vorzugsweise eisenbasierten, Sauerstoffabsorbers, vorzugsweise in Form eines Sachets, mit einem Detektor zum Detektieren eines elektromagnetischen Feldes, während der metallbasierte, Sauerstoffabsorber darin platziert oder relativ zu diesem, vorzugsweise gleichmäßig, bewegt wird; und einer Auswertungseinheit, die eingerichtet ist, auf der Grundlage des von dem Detektor erfassten Messsignals die Aufnahmekapazität des metallbasierten Sauerstoffabsorbers zu bestimmen. Daneben betrifft die Erfindung ein Verfahren zur Bestimmung einer Aufnahmekapazität eines metallbasierten Sauerstoffabsorbers gemäß dem nebengeordneten Anspruch.

### Stand der Technik

Die Anwesenheit von Sauerstoff in Verpackungen ist oftmals aus unterschiedlichen Gründen nicht erwünscht. Beispielsweise bedürfen Produkte aus insbesondere dem Bereich der Medizintechnik oder dem Bereich der Lebensmittel aus Gründen der Haltbarkeit oder der Produktion einer Absenz/Abwesenheit von Sauerstoff. Als Beispiele seien hier die künstliche Ernährung und die Gammasterilisierung von Dialysatoren genannt. Diese Absenz von Sauerstoff wird meist über Absorption des Sauerstoffs an Eisen bzw. Eisenverbindungen erreicht. Üblicherweise wird dabei ein Sachet (Beutel) mit Eisenpulver befüllt, bei dem der Sauerstoff über eine Membran Zugang zum Eisenpulver (Absorber) hat. Der Bindungsvorgang ist dabei größtenteils irreversibel, so dass der gebundene Sauerstoff nicht wieder freigesetzt wird. Somit kann eine Absenz von Sauerstoff / Sauerstofffreiheit in einem vordefinierten Volumen erreicht werden.

Ein Sauerstoffabsorber, der aus unterschiedlichen Gründen seine Kapazität bereits aufgebraucht hat, sei es beispielsweise durch eine undichte Transportverpackung oder einer zu langen Lagerung außerhalb einer Schutzatmosphäre während seiner Verarbeitung, ist schwer identifizierbar. Eine hieraus resultierende Anwesenheit von Sauerstoff in beispielsweise einer Produktverpackung hat negative Auswirkungen auf die Qualität und/oder die Haltbarkeit eines hierin verpackten Produkts.

Für eine Bestimmung einer Aufnahmekapazität/Kapazität/Restkapazität des Sauerstoffabsorbers/Absorbers und somit zur Qualitätssicherung des Produkts ist es notwendig, einen geeigneten Parameter zur Verfügung gestellt zu bekommen, welcher in einem eindeutigen Zusammenhang mit der Aufnahmekapazität eines Sachets steht.

In den Sachets befindet sich jeweils eine definierte Menge des Absorbens/Absorbers (Eisen), welches gemäß stöchiometrischen Gesetzen eine entsprechende Menge an Sauerstoff binden kann. Die ablaufende Reaktion ist dabei exotherm. Der zusätzlich gebundene Sauerstoff führt zu einer Masseerhöhung des Sachets. Der Parameter Temperatur kann nicht herangezogen werden, da das Sachet nach der exothermen Reaktion mit dem Sauerstoff wieder auf die Umgebungstemperatur abkühlt und eine Historie der Temperatur nicht erfasst wird. Der Parameter der Massezunahme ist zum einen aufgrund der geringen Masseänderung schwer zu ermitteln und zum anderen müsste aufgrund von Fertigungstoleranzen jedes einzelne Sachet unmittelbar nach seiner Produktion erfasst und gekennzeichnet sowie vor dem Einsatz seine Masse bestimmt werden. Eine Masseerhöhung könnte (jedoch nicht eindeutig) auf ein abreagiertes Absorbens bzw. den gebundenen Sauerstoff zurückgeführt werden.

Aus dem Stand der Technik ist eine Methode zur Sicherstellung einer Mindestkapazität eines Sachets bei der Produktion bekannt. Die JP 2010-271176 A offenbart eine solche Methode, bei der ein auf einer Rolle gefertigter Absorber mittels einer Führungsschiene geführt und durch einen Ringdetektor / eine Ringspule bewegt wird. Die Ringspule detektiert hierbei ein Signal, mittels dem bestimmt wird, ob eine Restkapazität bzw. Aufnahmefähigkeit für Sauerstoff ausreichend ist. Der Parameter ist hierbei eine Störung bzw. ein Signal eines elektromagnetischen bzw. magnetischen Feldes. Ein Sauerstoffabsorber mit einer geringen Aufnahmekapazität bzw. ein abreagierter Sauerstoffabsorber reagiert mit einer anderen, insbesondere einer geringeren, Feldstörung als ein Sauerstoffabsorber mit einer hohen Aufnahmekapazität. Somit kann die Störung eines elektromagnetischen Feldes durch einen hindurchgeführten Sauerstoffabsorber (Sachet) zur Beurteilung der Kapazität eines eisenbasierten Sauerstoffabsorbers herangezogen werden.

Ferner ist in der JP 2003 149207 A ein Verfahren zur Qualitätsprüfung von sauerstoffabsorbierenden Material offenbart. Dafür wird eine Spule unter hochfrequente Spannung gesetzt, um ein hochfrequentes Magnetfeld zu erzeugen. Das Eisenpulver enthaltende sauerstoffabsorbierende Material wird so angeordnet, um innerhalb des hochfrequenten Magnetfelds die Unterseite der Spule zu berühren und dabei die Impedanz der Spule zu messen. Anhand der Impedanz kann die Deaktivierung des sauerstoffabsorbierenden Materials überprüft werden.

Des Weiteren offenbart die EP 0 218 259 A2 ein Verfahren und eine Vorrichtung zum Erkennen der Position und Ausrichtung eines gesamten Objektartikels anhand seiner Teilform. Dabei wird zunächst ein zweidimensionales Bild von zumindest einem Abschnitt des Objektartikels eingespeist und im Anschluss daraus die Teilform extrahiert. Daraufhin wird wenigstens ein Parameter aus einem Schwerpunkt, einem Schnittpunkt zwischen Geraden und einer linearen Gleichung bezüglich jeder der extrahierten Teilformen berechnet und durch beliebige Kombination dieser Parameter die Position und Ausrichtung des gesamten Objektartikels berechnet.

Nachteilig hierbei ist jedoch, dass die Methode lediglich bei einer Produktion des Sachets angewendet werden kann und nicht zu einem Zeitpunkt nach der Produktion. So ist beispielsweise eine Bestimmung der verbleibenden Aufnahmekapazität des Sachets, das als Bestandteil in einer Produktverpackung angeordnet ist, nicht möglich. Eine Lage des Sachets bzw. des zu untersuchenden Absorbers innerhalb der Ringspule beeinflusst das Messsignal stärker als die Aufnahmekapazität des Sauerstoffabsorbers.

Dem kann zwar durch eine definierte Lage, etwa durch eine Fixierung des Absorbers abgeholfen werden, allerdings ist dies produktionstechnisch schwer darstellbar, da sich der Absorber meist an undefinierter Position/Stelle und undefinierter Lage innerhalb der Verpackung befindet. Es kann der Absorber zwar auch innerhalb der Verpackung fixiert sein, aber es ist aufwendig und schwer, die Verpackung exakt durch die Ringspule zu führen. Jede Abweichung der Position des Absorbers zu der Ringspule führt zu Abweichungen im Messsignal und damit zur Unbrauchbarkeit des Messwertes. Diese undefinierte Position und/oder Lage würde im Falle der sonstigen Metallfreiheit der Produktverpackung zwar eine Kontrolle einer Anwesenheit, nicht jedoch einer Kapazitätskontrolle des Sauerstoffabsorbers ermöglichen.

### Zusammenfassung der Erfindung

Es ist daher die Aufgabe der Erfindung, die Nachteile aus dem Stand der Technik zu vermeiden oder wenigstens zu mindern und insbesondere eine Vorrichtung und ein Verfahren zur Verfügung zu stellen, die/das eine Aufnahmekapazität eines Sauerstoffabsorbers einfach, sicher und zerstörungsfrei, auch nach einer Produktion und insbesondere, bei beispielsweise einer Verpackung mit einem Sachet, am Ort eines Einsatzes (in situ), bestimmen lässt.

Hinsichtlich der Vorrichtung wird die Aufgabe einer gattungsgemäßen Vorrichtung zur Bestimmung einer Aufnahmekapazität eines metallbasierten Sauerstoffabsorbers erfindungsgemäß dadurch gelöst, dass die Vorrichtung eine Positions- und/oder Lageerfassungseinrichtung aufweist, welche eingerichtet ist, eine Position und/oder eine (dreidimensionale) Lage des metallbasierten Sauerstoffabsorbers relativ zum elektromagnetischen Feld zu erfassen, wobei die Auswertungseinheit dafür eingerichtet ist, das Messsignal auf der Grundlage der erfassten Position und/oder Lage des metallbasierten Sauerstoffabsorbers das Messsignal zu korrigieren.

Im Unterschied zum bisher bekannten Stand der Technik nutzt die vorliegende Erfindung also die Positions- und/oder Lageerfassungseinrichtung, um zusätzlich zu dem vom Detektor detektierten/erfassten Messsignal vor, während oder nach der Erfassung des Messsignals auch eine Position und/oder Lage zu erfassen. Wichtig hierbei ist lediglich, dass sich die erfasste Position und/oder Lage zurücktransformieren/zurückberechnen lässt auf den Zeitpunkt, bei dem der Detektor das elektromagnetische Feld detektiert, während der Sauerstoffabsorber relativ zu dem elektromagnetischen Feld bewegt oder platziert wird. Die Auswertungseinheit korrigiert hiernach das Messsignal auf der Grundlage der erfassten Position und/oder Lage des metallbasierten Sauerstoffabsorbers.

Durch die Bestimmung der (Rest-)Aufnahmekapazität des Sauerstoffabsorbers kann so, insbesondere bei Einbringung des Sauerstoffabsorbers in eine Produktverpackung, ein wertvoller Beitrag zur Qualitätssicherung des in der Produktverpackung angeordneten Produktes erbracht werden. Durch die erfindungsgemäße Vorrichtung lässt sich also auch vor Ort (am Einsatzort des Produktes) die Aufnahmekapazität bestimmen. Eine definierte Position und/oder eine Lage des Sauerstoffabsorbers für eine Bestimmung der Aufnahmekapazität ist durch die erfindungsgemäße Vorrichtung nicht mehr zwingend, so dass auch, beispielsweise in einer Produktverpackung, eine Aufnahmekapazität des Sauerstoffabsorbers mit undefinierter Position und/oder Lage sicher und einfach bestimmt werden kann.

Vorteilhafte Ausführungsformen sind in den Unteransprüchen beansprucht und werden nachfolgend erläutert.

In einer bevorzugten Ausführungsform kann die Positions- und/oder Lageerfassungseinrichtung ein Kamerasystem, insbesondere ein 3D-Kamerasystem oder ein Stereokamerasystem, aufweisen, welches einen Bereich in oder um den Detektor erfasst, um den Sauerstoffabsorber optisch dreidimensional zu registrieren, und/oder einen Lasermesssensor zur Erfassung aufweisen. Durch insbesondere eine Anordnung von zwei Kameras, welche einen gleichen Bereich erfassen, mit einem

Winkel zueinander, lässt sich dreidimensional eine Struktur wie die eines Sauerstoffabsorbers erfassen. Wichtig hierbei ist, dass die Position und/oder Lage des Sauerstoffabsorbers relativ zu dem elektromagnetischen Feld bzw. bevorzugt relativ zu dem Detektor erfasst wird.

Vorzugsweise weist die Auswertungseinheit einen Speicher auf und ist dafür angepasst, auf Basis von (Referenz-) Daten, die in dem Speicher der Auswertungseinheit hinterlegt sind, das Messsignal auf Grundlage der erfassten Position und/oder Lage des Sauerstoffabsorbers das Messsignal zu korrigieren. Durch beispielsweise vorherige experimentelle Versuche, Simulationen oder Berechnungen lassen sich zu Positionen und/oder Lagen eines Sauerstoffabsorbers Daten gewinnen, welche anschließend als Referenzdaten in dem Speicher hinterlegt werden können. Auf diese Daten kann die Auswertungseinheit zugreifen und entsprechend die Aufnahmekapazität berechnen/bestimmen oder zumindest bestimmen, dass die Aufnahmekapazität des Sauerstoffabsorbers, welcher durch das elektromagnetische Feld bewegt bzw. darin platziert wird, nicht ausreichend ist.

Es ist bevorzugt, wenn die Auswertungseinheit dafür angepasst ist, auf Basis der in dem Speicher hinterlegten Daten und auf Grundlage der erfassten Position und/oder Lage eine derartige Korrektur des erfassten Messsignals (Messwertkorrektur) durchzuführen, dass die Auswertungseinheit, ausgehend von dem erfassten Messsignal, ein normiertes Messsignal einer Normlage und einer Normposition des Sauerstoffabsorbers (rück) berechnet, um so die Aufnahmekapazität des Sauerstoffabsorbers zu bestimmen. Ausgehend von einer nicht vordefinierten Position und/oder Lage des Sauerstoffabsorbers kann die Auswertungseinheit das Messsignal auf ein normiertes Messsignal eines Sauerstoffabsorbers zurückrechnen, welcher in einer definierten (Norm-) Position und/oder (Norm-) Lage bewegt werden würde. Hierdurch wird der Parameter Position und/oder Lage aus dem Messsignal (heraus)korrigiert bzw. herausgerechnet und der Parameter Position und/oder Lage ist für eine Bestimmung der Aufnahmekapazität nicht bzw. nur noch bedingt relevant.

Es ist von Vorteil, dass, wenn das normierte Messsignal geringer als ein in dem Speicher hinterlegter Normmindestwert ist, die Auswertungseinheit bestimmt, dass die Aufnahmekapazität des Sauerstoffabsorbers zu gering ist. Mit dem Setzen eines Normmindestwertes und damit eines unteren Limits kann auf einfache Weise eine Mindestanforderung an die Aufnahmekapazität des Sauerstoffabsorbers gesetzt werden. Ist diese Mindestanforderung nicht erfüllt, kann beispielsweise eine Warnmeldung ausgegeben oder insbesondere das Produkt gleich einer Weiterverwendung entzogen werden.

Vorzugsweise können in dem Speicher als Daten Mindestwerte zu einem definierten Bereich der Position und/oder der Lage hinterlegt sein und die Auswertungseinheit dafür angepasst sein, das erfasste Messsignal mit dem zugehörigen Mindestwert des erfassten Bereichs der Position und/oder der Lage zu vergleichen und, wenn das Messsignal geringer als der zugehörige Mindestwert ist, die Auswertungseinheit bestimmen, dass die Aufnahmekapazität des Sauerstoffabsorbers zu gering ist. Hierbei sind, beispielsweise in vorherigen Versuchen, Daten gesammelt und in dem Speicher hinterlegt worden, welche Mindestanforderungen an die Aufnahmekapazität des Sauerstoffabsorbers entsprechen. Werden diese (Mindest-) Messsignale in Abhängigkeit der erfassten Position und/oder Lage unterschritten und damit nicht erfüllt, bestimmt die Auswertungseinheit, dass die Aufnahmekapazität nicht ausreichend ist.

In einer bevorzugten Ausführungsform kann die Vorrichtung eine Fördervorrichtung, insbesondere ein Förderband, aufweisen, mit welchem der Sauerstoffabsorber durch den Detektor bewegt wird, sodass die Bewegung des Sauerstoffabsorbers durch den Detektor wiederholbar und insbesondere geradlinig und gleichmäßig mit einer konstanten, definierten Geschwindigkeit erfolgt. Eine Fördervorrichtung stellt sicher, dass die Bewegung des Sauerstoffabsorbers durch den Detektor wiederholbar und definiert erfolgt, sodass weitere Messfehler und Messabweichungen im Vorfeld vermieden werden.

Vorteilhafterweise kann der Detektor ein Detektorspulensystem mit zumindest zwei Spulen aufweisen, wobei eine der zumindest zwei Spulen eine Sendespule ist und eine der zumindest zwei Spulen eine Empfangsspule ist. Insbesondere wird der Sauerstoffabsorber durch diese Spulen hindurch bewegt. Während die Sendespule das vordefinierte (elektro-)magnetische Feld generiert, erfasst die Empfangsspule das elektromagnetisches Feld und damit auch eine Änderung des elektromagnetischen Feldes bei der Bewegung bzw. Platzierung des Sauerstoffabsorbers.

Es ist bevorzugt, wenn das Detektorspulensystem eine Sendespule und zwei Empfangsspulen mit jeweils einer, vorzugsweise gleichgroßen, Öffnung aufweist, welche in Längsrichtung des Detektors gesehen hintereinander aufgereiht/angeordnet sind, so dass die Öffnungen miteinander fluchten, und die eine Sendespule zwischen den zwei Empfangsspulen angeordnet ist. Dieses System ist besonders passend für eine Bestimmung der Aufnahmekapazität des Sauerstoffabsorbers.

In einer bevorzugten Ausführungsform kann das Detektorspulensystem nach Art einer Wechselstromerregung arbeiten, bei dem die Sendespule eine Wechselstromerregung ausführt und die Empfangsspule das Messsignal erfasst, so dass die Auswertungseinheit über eine erfasste Amplitude und eine Phasenlage des Messsignals und auf Grundlage der erfassten Position und/oder der Lage die Aufnahmekapazität des Sauerstoffabsorbers bestimmen kann.

Alternativ kann in einer bevorzugten Ausführungsform durch das Detektorspulensystem eine Pulsmessung durchgeführt werden, bei dem die Sendespule periodisch Sendepulse eines (elektro-)magnetischen Feldes aussenden, und die Empfangsspule nach Ausschalten des Sendepulses das Messsignal erfasst.

Hinsichtlich eines gattungsgemäßen Verfahrens zur Bestimmung einer Aufnahmekapazität eines metallbasierten Sauerstoffabsorbers wird die Aufgabe erfindungsgemäß durch die Schritte gelöst: Anordnen eines Detektors im Raum; Bewegen des Sauerstoffabsorbers durch ein elektromagnetisches Feld bzw. bevorzugt durch den Detektor; Erfassen (eines Messsignals) des elektromagnetischen Feldes mittels des Detektors bei der Bewegung des Sauerstoffabsorbers durch das elektromagnetische Feld bzw. durch den Detektor; Erfassen einer Position und/oder einer Lage des Sauerstoffabsorbers relativ zu dem elektromagnetischen Feld bzw. bevorzugt zu dem Detektor; und Bestimmen der Aufnahmekapazität des Sauerstoffabsorbers. Der Schritt Erfassen einer Position und/oder einer Lage des Sauerstoffabsorbers relativ zu dem elektromagnetischen Feld bzw. relativ zu dem Detektor muss dabei nicht notwendigerweise an der obigen Stelle erfolgen, sondern kann chronologisch gesehen umgeordnet werden. Dieser Schritt muss lediglich vor der Bestimmung der Aufnahmekapazität des Sauerstoffabsorbers erfolgen. Beispielsweise kann als zweiter Schritt die Erfassung der Position und/oder der Lage erfolgen und hiernach erst die Bewegung des Sauerstoffabsorbers durch das elektromagnetische Feld. Das Verfahren kann sowohl fehlende als auch bereits (teil-)verbrauchte Sauerstoffabsorber in insbesondere einer Produktverpackung zuverlässig erkennen und trägt somit maßgeblich zur Qualitätssicherung bei.

Vorzugsweise kann der Position und/oder der Lage des metallbasierten Sauerstoffabsorbers eine entsprechende Abklingkurve der Restkapazität zugeordnet werden. Diese Abklingkurven wurden für spezifische Absorbens zuvor ermittelt und in einer Datenbank hinterlegt. Die Auswertungseinheit bestimmt die Position und/oder die Lage des Sauerstoffabsorbers und sucht in der Datenbank die der Position und/oder der Lage nächstkommende Abklingkurve heraus. Der Position und/oder Lage des Absorbers ist insbesondere eine Mindestcharakteristik an Signalstörung zugeordnet, aus der man die Restkapazität des Absorbers ableiten kann. Die Vorrichtung muss insbesondere angelernt werden, bzw. die Datenbank muss mit verschiedenen Positionen und/oder Lagen bzw. Abklingkurven angelernt werden, um eine Bestimmung der Restkapazität vornehmen zu können.

Insbesondere kann vorzugsweise der Detektor bzw. die Ringspule bzw. dessen Querschnitt, durch die das Produkt inklusive des Sauerstoffabsorbers geführt wird, in eine Vielzahl kleiner Bereiche aufgeteilt werden. Die Positions- und/oder Lageerfassungseinrichtung, insbesondere das Stereo-Kamerasystem, detektiert, durch welche der Vielzahl der Bereiche der Sauerstoffabsorber geführt wird. Aus der Datenbank wird die für diesen Bereich hinterlegte, insbesondere zuvor empirisch ermittelte, Abklingkurve identifiziert. Diese enthält eine für diesen Bereich typische Mindestsignalcharakteristik, die vorzugsweise einer Mindestkapazität aus Vorversuchen zugeordnet ist. Ein Abgleich zwischen einer hinterlegter und einer gemessenen Signalcharakteristik bedingt schließlich eine Angabe zu der Restkapazität des Sauerstoffabsorbers.

### Kurzbeschreibung der Figuren

Die Erfindung wird nachfolgend anhand bevorzugter Ausführungsbeispiele mit Hilfe von Figuren näher erläutert. Es zeigen:
Fig. 1 in einer schematischen Vorderansicht eine erfindungsgemäße Vorrichtung einer ersten bevorzugten Ausführungsform,
Fig. 2 in einer perspektivischen Ansicht eine erfindungsgemäße Vorrichtung einer weiteren bevorzugten Ausführungsform,
Fig. 3 in einer perspektivischen Ansicht eine erfindungsgemäße Vorrichtung einer dritten bevorzugten Ausrührungsform welche portabel ist, und
Fig. 4 in einer schematischen Ansicht eine Darstellung einer erfassten Position und Lage eines Sauerstoffabsorbers gegenüber einer Normposition und Normlage des Sauerstoffabsorbers.

### Detaillierte Beschreibung bevorzugter Ausführungsformen

Die Figuren sind schematischer Natur und sollen nur dem Verständnis der Erfindung dienen. Gleiche Elemente sind mit denselben Bezugszeichen versehen. Die Merkmale der verschiedenen Ausführungsbeispiele können untereinander ausgetauscht werden.

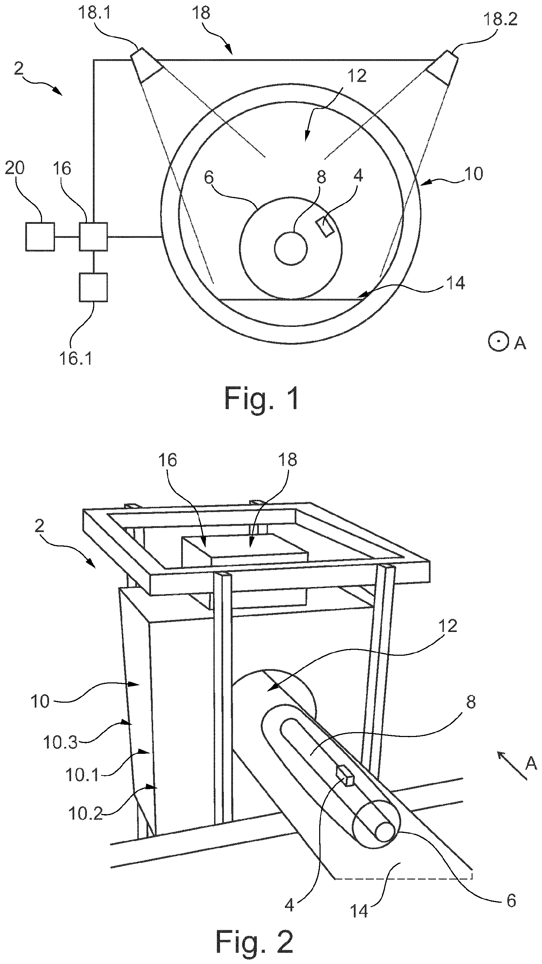

Figur 1 zeigt in einer perspektivischen, schematischen Darstellung in einer Vorderansicht eine erfindungsgemäße Vorrichtung 2 zur Bestimmung einer Aufnahmekapazität eines eisenbasierten Sauerstoffabsorbers 4 einer ersten bevorzugten Ausrührungsform. Der Sauerstoffabsorber 4 liegt hier in Form eines Sachets in einer Produktverpackung 6 vor. In dieser Produktverpackung 6, welche gasdicht gegenüber der Umgebung abgedichtet ist, ist neben dem Sachet 4 ebenfalls ein Produkt 8 angeordnet, welches in Absenz von Sauerstoff gelagert werden muss, um eine Produktqualität und Haltbarkeit des Produkts 8 zu gewährleisten. Sowohl das Produkt 8 als auch die Produktverpackung 6 sind nichtmetallisch ausgebildet.

Die Produktverpackung 6 mit dem Produkt 8 und dem Sachet 4 befindet sich in Figur 1 in einem inneren Bereich/einer Öffnung 12 eines ringförmig ausgebildeten Detektors/Detektorring 10 der Vorrichtung 2 zum Detektieren eines (elektro-) magnetischen Feldes. Genauer gesagt wird die Produktverpackung 6 zusammen mit dem Sachet 4 in einer Richtung normal zu Fläche der Öffnung 12 bzw. in eine Längsrichtung A des Detektors bzw. der Öffnung 12 durch den Detektor 10 hindurch bewegt. Für eine gleichförmige, geradlinige Bewegung der Produktverpackung 6 durch den Detektor 10 weist die Vorrichtung 2 eine Fördervorrichtung 14 in Form eines Förderbandes, ähnlich wie bei einem Warentransportband/Kassenband einer Kasse in einem Supermarkt auf. Alternativ kann in einer weiteren, nicht dargestellten Ausführungsform, der Detektor über die im Raum fixierte Produktverpackung mit dem Produkt und dem Sachet bewegt werden. Es ist natürlich auch möglich, dass sich beide, sowohl der Detektor als auch Sachet in der Produktverpackung bewegen, wichtig ist nur, dass sich der Detektor und das Sachet relativ zueinander bewegen.

Das Förderband 14 befördert bzw. bewegt dabei sowohl die Produktverpackung 6 als auch das Sachet 4 gleichmäßig mit einer definierten Geschwindigkeit durch den Detektor 10 hindurch. Bei dieser Bewegung detektiert der Detektor 10 das elektromagnetisches Feld im Bereich des Detektors 10, welches sich bei dem Durchgang des Sachets 4 durch die Öffnung 12 des Detektors 10 bedingt durch das eisenbasierte Sachet 4 verändert. Die Vorrichtung 2 weist ferner eine Auswertungseinheit 16 auf, welche auf der Grundlage des von dem Detektor 10 erfassten Messsignals, die Aufnahmekapazität des Sachets/Sauerstoffabsorbers 4 bestimmt.

Im Unterschied zu dem bisher bekannten Stand der Technik weist die erfindungsgemäße Vorrichtung 2 ferner eine Position- und/oder Lageerfassungsvorrichtung 18 auf, welche eine Position und/oder Lage des Sachets 4 relativ zu dem elektromagnetischen Feld bzw. hier relativ zu dem Detektor 10 erfasst. Die Position- und/oder Lageerfassungsvorrichtung 18 weist in dieser Ausführungsform ein optisches Erkennungssystem im sichtbaren Bereich des Lichts auf, das als Stereokamerasystem ausgebildet ist. Das Stereokamerasystem 18 ist in Figur 1 nur schematisch dargestellt, soll aber mit dem Detektor 10 in Längsrichtung A gesehen nicht in einer Ebene liegen, so dass das Stereokamerasystem 18 vor dem Detektor 10 eine Position und eine Lage des Sachets 4 erfassen kann, ohne dass geometriebedingt der Detektor 10 eine Erfassung behindert. Dabei sind zwei Kameras 18.1, 18.2 des Stereokamerasystems 18 in einem oberen Bereich der Vorrichtung 2 angeordnet und in Fig. 1 jeweils links und rechts gegenüber der Längsachse A platziert. Die beiden Kameras 18.1 und 18.2 sind schräg auf die Öffnung 12 des Detektors 10 ausgerichtet und erfassen optisch, bei einer transparenten Produktverpackung 6, jeweils ein 2-dimensionales Bild des Sachets 4 in der Produktverpackung 6. Die beiden Kameras sind dabei um die Längsachse A gesehen mit einem Winkel zueinander angeordnet.

Das Stereokamerasystem 18 ist dafür angepasst, aus den zwei erfassten zweidimensionalen Bildern der beiden Kameras 18.1 und 18.2 ein dreidimensionales Bild bzw. virtuelle Struktur des Sachets 4 in der Produktverpackung 6 zu ermitteln. Durch dieses dreidimensionale Bild/Struktur kann das Stereokamerasystem 18 sowohl eine Position als auch eine Lage des Sachets 4 gegenüber dem Stereokamerasystem 18, und da das Stereokamerasystem 18 gegenüber dem Detektor 10 definiert angeordnet ist, auch eine Position und eine Lage des Sachets gegenüber dem Detektor 10 ermitteln.

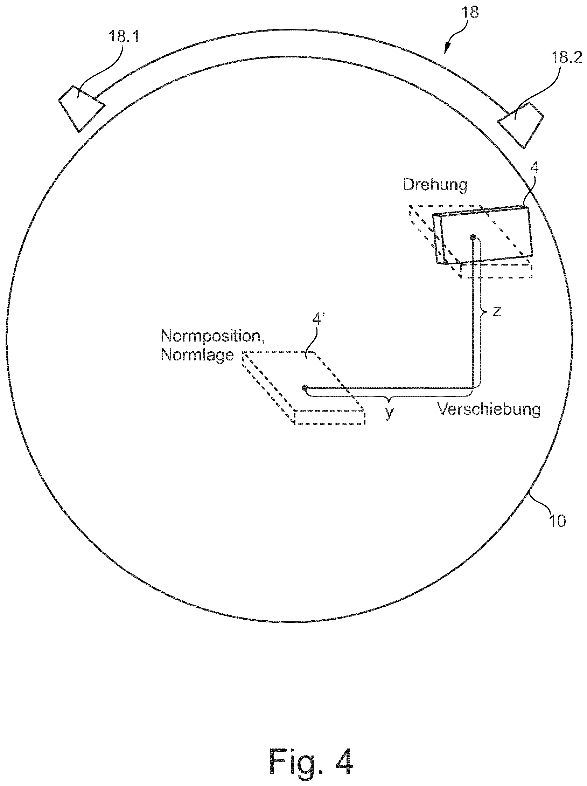

Der Auswertungseinheit 16 steht sowohl die erfasste Position und Lage des Sachets 4, als auch das Messsignal des Detektors 10 bei Bewegung des Sachets 4 durch das elektromagnetische Feld im Bereich der Öffnung 12 des Detektors 10 zur Verfügung. Die Auswertungseinheit 16 weist ebenfalls einen Speicher 16.1 auf, in dem Daten hinterlegt sind, welche die Auswertungseinheit 16 zur Messwertkorrektur des durch den Detektor 10 erfassten Messsignals heranzieht. Im Speziellen sind in dem Speicher 16.1 Daten hinterlegt, welche für einen bestimmten Bereich einer Lage, also einer Orientierung des Sachets 4 gegenüber einer Normlage (normierte Lage) implementiert durch drei Winkelangaben, einem Rollwinkel, einem Nickwinkel und einem Gierwinkel (als spezielle Eulerwinkel), und einem bestimmten Bereich einer Position, implementiert durch eine Koordinatenangabe in x, y und z Richtung im kartesischen Koordinatensystem (siehe Figur 4), eine Korrektur, genauer gesagt einen Korrekturwert für das erfasste Messsignal bereitstellt. Die Auswertungseinheit 16 multipliziert diesen Korrekturwert mit dem erfassten Messsignal und als Ergebnis liefert die Auswertungseinheit 16 der Vorrichtung 2 eine erfasste normierte Aufnahmekapazität des Sachets 4. Das bedeutet, dass die Auswertungseinheit 16 das Messsignal anhand der Daten zu jeweils der erfassten Position und der erfassten Lage auf ein normiertes Messsignal einer normierten Position und einer normierten Lage rück rechnet, bei dem das Sachet 4 in einer zuvor festgelegten definierten Position und Lage durch den Detektor 10 bewegt würde.

Unter Bereich der Lage ist eine weitere Unterteilung in drei Unterbereiche der drei Winkel (Roll-, Nick- und Gierwinkel) zu verstehen, welche in Kombination zueinander betrachtet werden müssen. Beispielsweise kann der Rollwinkel von 360° in vier Unterbereiche mit jeweils 90° unterteilt werden. Auch kann eine feinere Einteilung mit 360 Unterbereichen in Gradschritten erfolgen. Die spezielle Kombination der der Unterbereiche zusammen mit der erfassten Position (x, y, z) entspricht genau einem Korrekturwert, der in dem Speicher hinterlegt ist.

Hierdurch wird die Position und Lage des Sachets 4 gegenüber dem elektromagnetischen Feld bzw. gegenüber dem Detektor 10 herausgerechnet und es verbleibt lediglich das Messsignal, welches das Sachet 4 mit einem Eisenpulver als Inhalt bei einer Bewegung durch den Detektor 10 (mit normierter Position und Lage) liefern würde. Hierdurch kann das Sachet 4 in der Produktverpackung beliebig angeordnet sein und dennoch kann die erfindungsgemäße Vorrichtung 2 die Aufnahmekapazität des Sachets 4 zuverlässig, genau und einfach bestimmen.

Der Wert der bestimmten Aufnahmekapazität des Sachets 4 wird durch die Auswertungseinheit an eine Schnittstelle 20 weitergeleitet, um beispielsweise auf einem Display angezeigt zu werden.

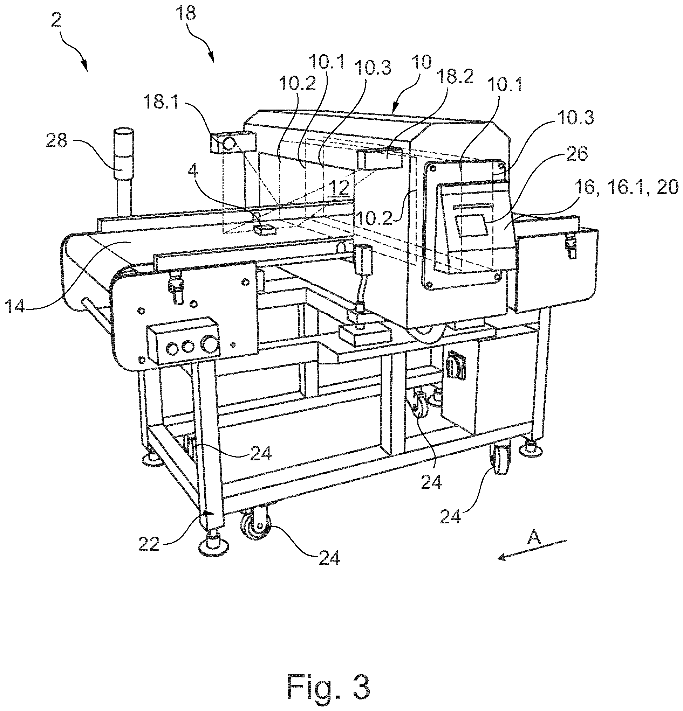

Figur 2 zeigt eine erfindungsgemäße Vorrichtung 2 zur Bestimmung einer Aufnahmekapazität eines metallbasierten Sauerstoffabsorbers 4 einer weiteren, zweiten bevorzugten Ausführungsform. Die Vorrichtung 2 weist als Detektor 10 ein Spulensystem mit drei Spulen 10.1, 10.2, 10.3 auf, welche in Figur 3 gestrichelt angedeutet sind. Dabei ist eine der drei Spulen eine Sendespule 10.1, und zwei der drei Spulen Empfangsspulen 10.2, 10.3. In Richtung der Längsachse/Längsrichtung A fluchten die Öffnungen der Spulen 10.1, 10.2, 10.3 und die Sendespule 10.1 ist in Richtung der Längsachse A gesehen zwischen den beiden Empfangsspulen 10.2, 10.3 angeordnet.

Das Detektorspulensystem der zweiten bevorzugten Ausführungsform arbeitet nach Art einer Wechselstromerregung, bei dem die Sendespule 10.1 eine Wechselstromerregung ausführt und die beiden Empfangsspulen 10.2 10.3 das Messsignal des elektromagnetischen Feldes erfassen, und über eine Amplitude und eine Phasenlage des Messsignals die Auswertungseinheit 16 zusammen mit der erfassten Position und der Lage die Aufnahmekapazität des Sauerstoffabsorbers 4 zu bestimmen. Auch in dieser Ausführungsform weist die Vorrichtung 2 eine Positions- und Lageerfassungsvorrichtung 18 in Form eines Kamerasystems auf. In dieser Ausführungsform ist das Kamerasystem 18 allerdings nicht vor oder hinter dem Detektor 10 angeordnet, sondern der Detektor 10 weist in einem oberen Bereich eine Öffnung auf (hier nicht dargestellt), durch welche das Kamerasystem 18 in das Innere/ den inneren Bereich / die Öffnung 12 des Detektors 10 Einblick hat und somit die Position und die Lage des Sauerstoffabsorbers 4 bei seiner Bewegung durch den Detektor 10 erfassen kann. Über das Förderband 14 wird die Produktverpackung 6 mit dem Produkt 8 und dem Sauerstoffabsorber gleichmäßig durch die Öffnung 12 des Detektors 10 und parallel zur Längsachse A bewegt. Die Funktionsweise einer Bestimmung der Aufnahmekapazität des Sauerstoffabsorbers erfolgt wieder analog zu der ersten bevorzugten Ausführungsform.

Figur 3 zeigt eine dritte bevorzugte Ausführungsform einer erfindungsgemäßen Vorrichtung 2. Diese Vorrichtung 2 weist an einem unteren Bereich seines Gestells 22, Rollen 24 für eine Portabilität der Vorrichtung 2 auf. Der Detektor 10 weist wieder eine Öffnung 12 auf, zu der bzw. durch die wieder ein Förderband 14 den Sauerstoffabsorber 4 parallel zu der Längsachse A direkt oder indirekt über eine Produktverpackung 6 (hier nicht dargestellt) hindurch bewegt. Nachgeschaltet zu dem Detektor 10 sind wieder zwei Kameras 18.1 und 18.2 oberhalb des Förderbandes 14 mit einem Winkel um die Längsachse A gegeneinander angeordnet, welche beide einen gemeinsamen Bereich erfassen, um die Position und die Lage des Sauerstoffabsorbers 4, der auch direkt auf dem Förderband platziert werden kann, zu erfassen. Auf einem Display 26 wird die (Rest-) Aufnahmekapazität des Sauerstoffabsorbers 4 angezeigt, welche die Auswertungseinheit 16 bestimmt. Ist die Aufnahmekapazität geringer als ein gesetzter Mindestwert leuchtet eine optische Anzeige 28 in Form einer Maschinenampel Rot auf.

Figur 4 zeigt schematisch eine Position und eine Lage eines Sauerstoffabsorbers 4 gegenüber einer Normlage (normierten Lage) und einer Normposition (normierte Position) des Sauerstoffabsorbers 4. Hinsichtlich der kartesischen Koordinaten für die Position sei angemerkt, dass lediglich zwei Koordinaten (y, z) notwendig sind, da der Sauerstoffabsorber 4 in Richtung der Längsachse A und hier damit in eine Koordinatenrichtung, nämlich als x-Richtung festgelegt, bewegt wird. Die Position der Normlage und Normposition wird ausgehend von der erfassten Position und Lage durch eine Transformation mit einer entsprechenden Drehung um die drei Winkel (Roll-, Nick-, Gierwinkel) und eine entsprechende translatorische Bewegung in y und z Richtung erreicht. Dieser Transformation wird ein entsprechender Korrekturwert zugeordnet.

### Bezugszeichen

- 2: Vorrichtung
- 4: Sauerstoffabsorber
- 6: Produktverpackung
- 8: Produkt
- 10: Detektor
- 10.1: Sendespule
- 10.2: erste Empfangsspule
- 10.3: zweite Empfangsspule
- 12: Öffnung
- 14: Fördervorrichtung
- 16: Auswertungseinheit
- 16.1: Speicher
- 18: Positions- und/oder Lageerfassungsvorrichtung
- 18.1: erste Kamera
- 18.2: zweite Kamera
- 20: Schnittstelle
- 22: Gestell
- 24: Rollen
- 26: Display
- 28: Optische Anzeige

- A: Längsachse/Längsrichtung

## Patentansprüche

1. Vorrichtung (2) zur Bestimmung einer Aufnahmekapazität eines metallbasierten Sauerstoffabsorbers (4), vorzugsweise in Form eines Sachets, mit:
einem Detektor (10) zum Detektieren eines elektromagnetischen Feldes, während der metallbasierte Sauerstoffabsorber (4) darin platziert oder relativ zu diesem, vorzugsweise gleichmäßig, bewegt wird; und
einer Auswertungseinheit (16), die eingerichtet ist, auf der Grundlage des von dem Detektor (10) erfassten Messsignals die Aufnahmekapazität des metallbasierten Sauerstoffabsorbers (4) zu bestimmen,
**gekennzeichnet durch:**
eine Positions- und/oder Lageerfassungseinrichtung (18), welche eingerichtet ist, eine Position und/oder eine Lage des metallbasierten Sauerstoffabsorbers (4) relativ zu dem elektromagnetischen Feld zu erfassen; wobei
die Auswertungseinheit (16) eingerichtet ist, das Messsignal auf der Grundlage der erfassten Position und/oder Lage des metallbasierten Sauerstoffabsorbers (4) das Messsignal zu korrigieren.

2. Vorrichtung (2) nach Anspruch 1, **dadurch gekennzeichnet, dass** die Positions- und/oder Lageerfassungseinrichtung (18) ein Kamerasystem, insbesondere ein Stereokamerasystem, aufweist, welches einen Bereich in oder um den Detektor (10) erfasst, um den Sauerstoffabsorber (4) optisch dreidimensional zu registrieren, und/oder dass die Positions- und/oder Lageerfassungseinrichtung (18) einen Lasermesssensor zur Erfassung aufweist.

3. Vorrichtung (2) nach Anspruch 1 oder 2, **dadurch gekennzeichnet, dass** die Auswertungseinheit (16) einen Speicher (16.1) umfasst und dafür angepasst ist, auf Basis von Daten, die in dem Speicher (16.1) der Auswertungseinheit (16) hinterlegt sind, das Messsignal auf Grundlage der erfassten Position und/oder Lage des Sauerstoffabsorbers (4) das Messsignal zu korrigieren.

4. Vorrichtung (2) nach Anspruch 3, **dadurch gekennzeichnet, dass** die Auswertungseinheit (16) dafür angepasst ist, auf Basis der in dem Speicher (16.1) hinterlegten Daten und auf Grundlage der erfassten Position und/oder Lage eine derartige Korrektur des erfassten Messsignals durchzuführen, dass die Auswertungseinheit (16), ausgehend von dem erfassten Messsignal, ein normiertes Messsignal einer Normlage und einer Normposition des Sauerstoffabsorbers (4) berechnet, um so die Aufnahmekapazität des Sauerstoffabsorbers (4) zu bestimmen.

5. Vorrichtung (2) nach Anspruch 4, **dadurch gekennzeichnet, dass** wenn das normierte Messsignal geringer als ein in dem Speicher (16.1) hinterlegter Normmindestwert ist, die Auswertungseinheit (16) bestimmt, dass die Aufnahmekapazität des Sauerstoffabsorbers (4) zu gering ist.

6. Vorrichtung (2) nach Anspruch 3, **dadurch gekennzeichnet, dass**
in dem Speicher (16.1) als Daten Mindestwerte zu einem definierten Bereich der Position und/oder der Lage hinterlegt sind, und die Auswertungseinheit (16) dafür angepasst ist, das erfasste Messsignal mit dem zugehörigen Mindestwert des erfassten Bereichs der Position und/oder der Lage zu vergleichen und
wenn das Messsignal geringer als der zugehörige Mindestwert ist, die Auswertungseinheit (16) bestimmt, dass die Aufnahmekapazität des Sauerstoffabsorbers (4) zu gering ist.

7. Vorrichtung (2) nach einem der vorangegangenen Ansprüche, **dadurch gekennzeichnet, dass** die Vorrichtung eine Fördervorrichtung (14), insbesondere ein Förderband, aufweist, mit welchem der Sauerstoffabsorber (4) durch den Detektor (10) bewegt wird, sodass die Bewegung des Sauerstoffabsorbers (4) durch den Detektor (10) wiederholbar, insbesondere geradlinig und gleichmäßig mit einer konstanten, definierten Geschwindigkeit erfolgt.

8. Vorrichtung (2) nach einem der vorangegangenen Ansprüche, **dadurch gekennzeichnet, dass** der Detektor (10) ein Detektorspulensystem mit zumindest zwei Spulen aufweist, wobei eine der zumindest zwei Spulen eine Sendespule (10.1) ist und eine der zumindest zwei Spulen eine Empfangsspule (10.2, 10.3) ist.

9. Vorrichtung (2) nach Anspruch 8, **dadurch gekennzeichnet, dass** das Detektorspulensystem eine Sendespule (10.1) und zwei Empfangsspulen (10.2, 10.3) mit jeweils einer, vorzugsweise gleichgroßen, Öffnung (12) aufweist, welche in eine Längsrichtung (A) der Öffnung (12) gesehen hintereinander aufgereiht/angeordnet sind, so dass die Öffnungen (12) miteinander fluchten, und die eine Sendespule (10.1) zwischen den zwei Empfangsspulen (10.2, 10.3) angeordnet ist.

10. Verfahren zur Bestimmung einer Aufnahmekapazität eines metallbasierten Sauerstoffabsorbers, vorzugsweise in Form eines Sachets, **gekennzeichnet durch** die Schritte:
Anordnen eines Detektors (10) im Raum;
Bewegen des Sauerstoffabsorbers (4) relativ zu einem elektromagnetischen Feld;
Erfassen eines Messsignals des elektromagnetischen Feldes mittels des Detektors (10) bei der Bewegung des Sauerstoffabsorbers (4) durch das elektromagnetische Feld;
Erfassen einer Position und/oder einer Lage des Sauerstoffabsorbers (4) relativ zu dem elektromagnetischen Feld; und
Bestimmen der Aufnahmekapazität des Sauerstoffabsorbers (4).

## Claims

1. A device (2) for determining an absorption capacity of a metal-based oxygen absorber (4), preferably in the form of a sachet, comprising:
a detector (10) for detecting an electromagnetic field while the metal-based oxygen absorber (4) is placed therein or moved relative thereto, preferably in uniform manner; and
an evaluation unit (16) which is configured to determine the absorption capacity of the metal-based oxygen absorber (4) on the basis of the measurement signal detected by the detector (10),
**characterized by:**
a position and/or orientation sensing device (18) which is configured to detect a position and/or an orientation of the metal-based oxygen absorber (4) relative to the electromagnetic field; wherein
the evaluation unit (16) is configured to correct the measurement signal on the basis of the detected position and/or orientation of the metal-based oxygen absorber (4).

2. The device (2) according to claim 1, **characterized in that** the position and/or orientation sensing device (18) has a camera system, in particular a stereo camera system, which detects an area in or around the detector (10) in order to optically register the oxygen absorber (4) in three dimensions, and/or **in that** the position and/or orientation sensing device (18) has a laser measurement sensor for detection.

3. The device (2) according to claim 1 or 2, **characterized in that** the evaluation unit (16) comprises a memory (16.1) and is adapted, on the basis of data which are stored in the memory (16.1) of the evaluation unit (16), to correct the measurement signal on the basis of the detected position and/or orientation of the oxygen absorber (4).

4. The device (2) according to claim 3, **characterized in that** the evaluation unit (16) is adapted, on the basis of the data stored in the memory (16.1) and on the basis of the detected position and/or orientation, to carry out such a correction of the detected measurement signal that the evaluation unit (16), starting from the detected measurement signal, calculates a normalized measurement signal of a standard position and a standard orientation of the oxygen absorber (4) in order to determine the absorption capacity of the oxygen absorber (4).

5. The device (2) according to claim 4, **characterized in that,** if the normalized measurement signal is less than a minimum standard value stored in the memory (16.1), the evaluation unit (16) determines that the absorption capacity of the oxygen absorber (4) is too low.

6. The device (2) according to claim 3, **characterized in that**
minimum values in terms of a defined range of the position and/or orientation are stored in the memory (16.1) as data, and the evaluation unit (16) is adapted to compare the acquired measurement signal with the associated minimum value of the detected range of the position and/or orientation, and
if the measurement signal is less than the associated minimum value, the evaluation unit (16) determines that the absorption capacity of the oxygen absorber (4) is too low.

7. The device (2) according to one of the preceding claims, **characterized in that** the device has a conveyor (14), in particular a conveyor belt, with which the oxygen absorber (4) is moved through the detector (10), so that the movement of the oxygen absorber (4) through the detector (10) can be carried out in reproducible manner, in particular in linear and uniform fashion at a constant, defined speed.

8. The device (2) according to one of the preceding claims, **characterized in that** the detector (10) has a detector coil system with at least two coils, one of the at least two coils being a transmitting coil (10.1) and one of the at least two coils being a receiving coil (10.2, 10.3).

9. A device (2) according to claim 8, **characterized in that** the detector coil system comprises a transmitting coil (10.1) and two receiving coils (10.2, 10.3) each having an opening (12) preferably of the same size, which are lined up/arranged one behind the other as viewed in a longitudinal direction (A) of the opening (12) so that the openings (12) are aligned with one another, and the one transmitting coil (10.1) is arranged between the two receiving coils (10.2, 10.3).

10. A method for determining the absorption capacity of a metal-based oxygen absorber, preferably in the form of a sachet, **characterized by** the steps:
arranging a detector (10) in space;
moving the oxygen absorber (4) relative to an electromagnetic field;
detecting a measurement signal of the electromagnetic field by means of the detector (10) when the oxygen absorber (4) is moved through the electromagnetic field;
detecting a position and/or an orientation of the oxygen absorber (4) relative to the electromagnetic field; and
determining the absorption capacity of the oxygen absorber (4).

## Revendications

1. Dispositif (2) permettant de déterminer une capacité d'absorption d'un absorbeur d'oxygène à base de métal (4), de préférence sous forme d'un sachet, avec :
un détecteur (10) permettant de détecter un champ électromagnétique pendant que l'absorbeur d'oxygène à base de métal (4) y est placé ou est déplacé par rapport à celui-ci, de préférence de manière identique ; et
une unité d'évaluation (16) qui est conçue pour déterminer la capacité d'absorption de l'absorbeur d'oxygène à base de métal (4) en se basant sur le signal de mesure détecté par le détecteur (10),
**caractérisé par :**
un appareil de détection de position et/ou de situation (18) qui est conçu pour détecter une position et/ou une situation de l'absorbeur d'oxygène à base de métal (4) par rapport au champ électromagnétique ; dans lequel
l'unité d'évaluation (16) est conçue pour corriger le signal de mesure en se basant sur la position et/ou la situation détectée(s) de l'absorbeur d'oxygène à base de métal (4).

2. Dispositif (2) selon la revendication 1, **caractérisé en ce que** l'appareil de détection de position et/ou de situation (18) présente un système de caméra, en particulier un système de caméra stéréo, qui détecte une région dans ou autour du détecteur (10) afin d'enregistrer l'absorbeur d'oxygène (4) de manière optique en trois dimensions, et/ou **en ce que** l'appareil de détection de position et/ou de situation (18) présente un capteur de mesure laser pour la détection.

3. Dispositif (2) selon la revendication 1 ou 2, **caractérisé en ce que** l'unité d'évaluation (16) comprend une mémoire (16.1) et est adaptée pour, sur la base de données qui sont stockées dans la mémoire (16.1) de l'unité d'évaluation (16), corriger le signal de mesure le signal de mesure en se basant sur la position et/ou la situation détectée(s) de l'absorbeur d'oxygène (4).

4. Dispositif (2) selon la revendication 3, **caractérisé en ce que** l'unité d'évaluation (16) est adaptée pour, sur la base des données stockées dans la mémoire (16.1) et en se basant sur la position et/ou la situation détectée(s), mettre en œuvre une correction du signal de mesure détecté de telle manière que l'unité d'évaluation (16), à partir du signal de mesure détecté, calcule un signal de mesure normalisé d'une situation standard et d'une position standard de l'absorbeur d'oxygène (4) afin de déterminer ainsi la capacité d'absorption de l'absorbeur d'oxygène (4).

5. Dispositif (2) selon la revendication 4, **caractérisé en ce que** si le signal de mesure normalisé est inférieur à une valeur standard minimale stockée dans la mémoire (16.1), l'unité d'évaluation (16) détermine que la capacité d'absorption de l'absorbeur d'oxygène (4) est trop faible.

6. Dispositif (2) selon la revendication 3, **caractérisé en ce que**
des valeurs minimales pour une région définie de la position et/ou de la situation sont stockées dans la mémoire (16.1) sous forme de données, et l'unité d'évaluation (16) est adaptée pour comparer le signal de mesure détecté avec la valeur minimale associée de la région détectée de la position et/ou de la situation et
si le signal de mesure est inférieur à la valeur minimale associée, l'unité d'évaluation (16) détermine que la capacité d'absorption de l'absorbeur d'oxygène (4) est trop faible.

7. Dispositif (2) selon l'une quelconque des revendications précédentes, **caractérisé en ce que** le dispositif présente un dispositif de transport (14), en particulier une bande transporteuse, avec lequel l'absorbeur d'oxygène (4) est déplacé à travers le détecteur (10) de sorte que le déplacement de l'absorbeur d'oxygène (4) à travers le détecteur (10) a lieu de manière à pouvoir être répété, en particulier de manière rectiligne et identique à une vitesse constante et définie.

8. Dispositif (2) selon l'une quelconque des revendications précédentes, **caractérisé en ce que** le détecteur (10) présente un système de bobines de détection avec au moins deux bobines, dans lequel l'une des au moins deux bobines est une bobine émettrice (10.1) et l'une des au moins deux bobines est une bobine réceptrice (10.2, 10.3).

9. Dispositif (2) selon la revendication 8, **caractérisé en ce que** le système de bobines de détection présente une bobine émettrice (10.1) et deux bobines réceptrices (10.2, 10.3) munies respectivement d'une ouverture (12) de préférence de même taille, qui, considérées dans une direction longitudinale (A) de l'ouverture (12), sont alignées/agencées les unes derrière les autres de sorte que les ouvertures (12) sont alignées les unes avec les autres, et la bobine émettrice (10.1) est agencée entre les deux bobines réceptrices (10.2, 10.3).

10. Procédé de détermination d'une capacité d'absorption d'un absorbeur d'oxygène à base de métal, de préférence sous forme d'un sachet, **caractérisé par** les étapes consistant à :
agencer un détecteur (10) dans l'espace ;
déplacer l'absorbeur d'oxygène (4) par rapport à un champ électromagnétique ;
détecter un signal de mesure du champ électromagnétique au moyen du détecteur (10) lors du déplacement de l'absorbeur d'oxygène (4) à travers le champ électromagnétique ;
détecter une position et/ou une situation de l'absorbeur d'oxygène (4) par rapport au champ électromagnétique ; et
déterminer une capacité d'absorption de l'absorbeur d'oxygène (4).
